# EUROPEAN PATENT APPLICATION

(11) **EP 4 395 113 A1**
(43) Date of publication of application: **03.07.2024**
(21) Application number: 23195064.3
(22) Date of filing: 04.09.2023
(51) Int. Cl.: H02J 7/00, G06F 1/26

(54) **POWER MANAGEMENT FOR BATTERY GROUP**

(30) Priority: 30.12.2022 US 202218148578
(71) Applicant: INTEL Corporation, Santa Clara, CA 95054 (US)
(72) Inventor: MATSUMURA, Naoki, San Jose, 95118 (US); RAO, Raghavendra, KA 560072 Bangalore (IN); LEE, Ming-Chia, 221 New Taipei City (TW); SINGH, Jagadish, KA 560037 Bangalore (IN)
(74) Representative: Viering, Jentschura & Partner mbB Patent- und Rechtsanwälte

(57) **Abstract**

In an embodiment, a system may include at least one system component associated with a power load, a battery group, and control circuitry. The battery group may include multiple battery packs connected in a series connection. The control circuitry may: monitor a voltage level of each battery pack in the battery group during a discharge to the power load of the at least one system component; determine discharge capabilities for the battery packs in the battery group; and in response to a determination that the power load of the at least one system component exceeds a lowest discharge capability of the plurality of battery packs in the battery group, reduce the power load of the at least one system component below the lowest discharge capability of the plurality of battery packs in the battery group.

## Description

### Field of Invention

Embodiments relate generally to power management for electrical batteries. More particularly, embodiments are related to power management for groups of multiple battery packs.

### Background

Advances in semiconductor processing and logic design have permitted an increase in the amount of logic that may be present on integrated circuit devices. As a result, computer system configurations have evolved from a single or multiple integrated circuits in a system to multiple hardware threads, multiple cores, multiple devices, and/or complete systems on individual integrated circuits. Further, as the density of integrated circuits has grown, the power requirements for computing systems have also grown. As a result, there is a vital need for energy efficiency and conservation associated with integrated circuits.

### Brief Description of the Drawings

FIG. 1 is a diagram of an example computing system, in accordance with one or more embodiments.
FIG. 2 is a diagram of an example processor with core(s), in accordance with one or more embodiments.
FIGs. 3A-3B are diagrams of example core architectures, in accordance with one or more embodiments.
FIG. 4 is a diagram of an example execution unit(s) circuitry, in accordance with one or more embodiments.
FIG. 5 is a diagram of an example register architecture, in accordance with one or more embodiments.
FIGS. 6A-6B are diagrams of example systems in accordance with one or more embodiments.
FIGs. 7A-7B are diagrams of example systems, in accordance with one or more embodiments.
FIGs. 8A-8B are illustrations of example calculations, in accordance with one or more embodiments.
FIG. 9 is a flow diagram of an example method, in accordance with one or more embodiments.
FIG. 10 is a diagram of an example method, in accordance with one or more embodiments.
FIG. 11 is a flow diagram of an example method, in accordance with one or more embodiments.
FIG. 12 is a diagram of an example storage medium, in accordance with one or more embodiments.

### Detailed Description

A device may include a battery to provide electrical power when the device is not connected to an electrical outlet. For example, some devices using batteries may include notebook computers, tablet computers, smartphones, personal assistants, media devices, and so forth. In some examples, a single device may be powered by a set of multiple battery packs. As used herein, the term "battery pack" refers to a single battery unit or component having a standardized form factor and power characteristics (e.g., voltage, power capacity, etc.). A battery pack may be removable from a powered device (e.g., by a user of the device). For example, a computing device may include multiple slots to receive a set of battery packs. In another example, a computing device may include a single slot to receive a carrier or package that includes multiple battery packs.

In some examples, each battery pack may include a circuit to protect the corresponding battery pack. For example, when the battery pack is being used as a power supply for a computing device, the protection circuit may determine that the discharge voltage of the battery pack has fallen below a predefined minimum discharge level, and in response may shut down or otherwise disconnect the battery pack. In another example, when the battery pack is being charged (e.g., by an external power supply), the protection circuit may determine that the charging voltage of the battery pack has exceeded a predefined maximum charging level, and in response may shut down that battery pack.

In some examples, all or some of the multiple battery packs may be connected in a series connection to supply a desired power level to the device. However, if one of the battery packs is disabled (e.g., by a protection circuit), the series connection may be broken. Accordingly, in such situations, the battery power provided to the device may be interrupted by disabling one of multiple battery packs in a series connection.

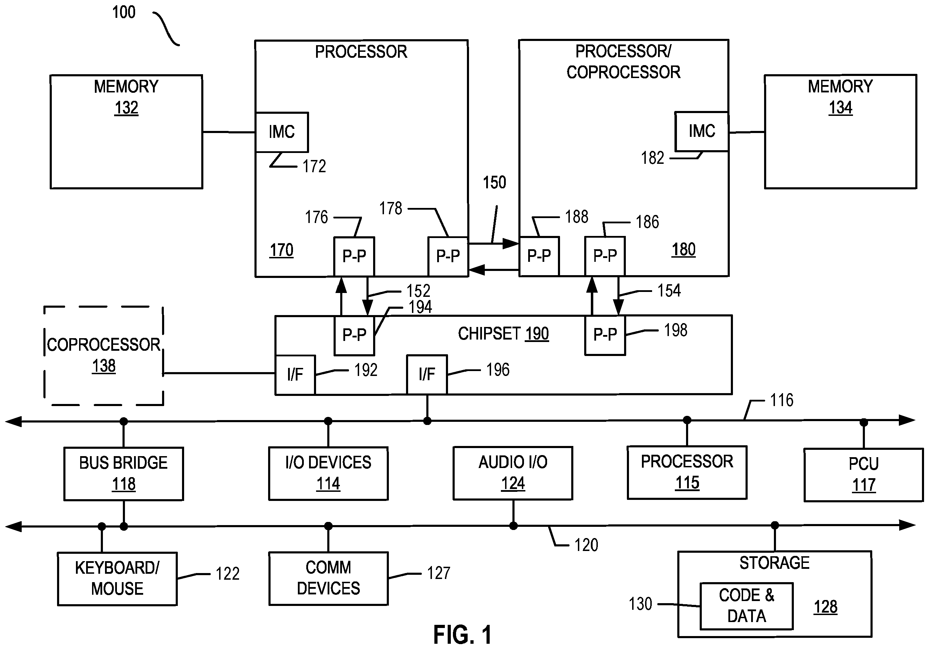

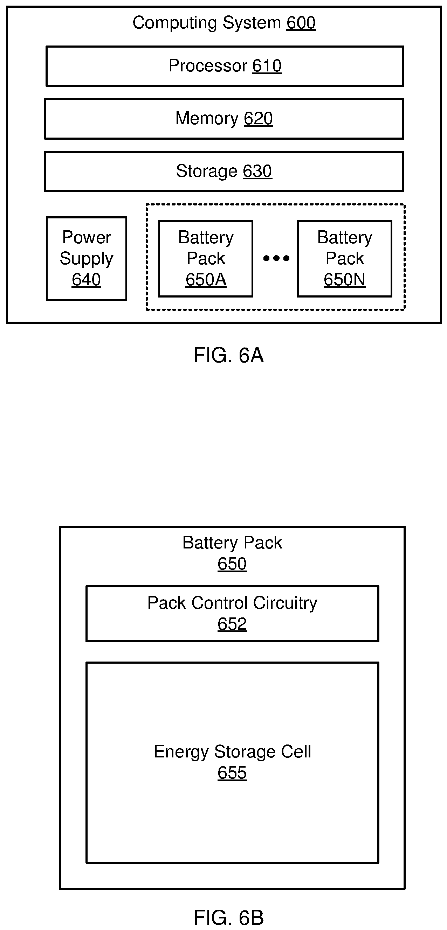

In accordance with one or more embodiments, a system may be powered by multiple battery packs in a series connection. The system may include control logic to monitor the discharge capability of each battery pack, and to determine whether the system power load exceeds the lowest discharge capability of the multiple battery packs. If so, the control logic may reduce the system power load to not exceed the lowest discharge capability of the multiple battery packs. For example, the control logic may reduce the current or power level associated with a maximum performance state (e.g., a "turbo" mode of a computing device). In this manner, the control logic may reduce the likelihood that the system power supply is interrupted due to disabling one of the battery packs. Accordingly, some embodiments may provide improved reliability and use of the system. Various details of some embodiments are described further below with reference to FIGs. 6A-12. Further, exemplary systems and architectures are described below with reference to FIGs. 1-5.

### Example systems and architectures

### FIG. 1 - Example Computing System

FIG. 1 illustrates an example computing system. Multiprocessor system 100 is an interfaced system and includes a plurality of processors including a first processor 170 and a second processor 180 coupled via an interface 150 such as a point-to-point (P-P) interconnect, a fabric, and/or bus. In some examples, the first processor 170 and the second processor 180 are homogeneous. In some examples, first processor 170 and the second processor 180 are heterogenous. Though the example system 100 is shown to have two processors, the system may have three or more processors, or may be a single processor system. In some examples, the computing system is implemented, wholly or partially, with a system on a chip (SoC) or a multichip (or multi-chiplet) module, in the same or in different package combinations.

Processors 170 and 180 are shown including integrated memory controller (IMC) circuitry 172 and 182, respectively. Processor 170 also includes interface circuits 176 and 178, along with core sets. Similarly, second processor 180 includes interface circuits 186 and 188, along with a core set as well. A core set generally refers to one or more compute cores that may or may not be grouped into different clusters, hierarchal groups, or groups of common core types. Cores may be configured differently for performing different functions and/or instructions at different performance and/or power levels. The processors may also include other blocks such as memory and other processing unit engines.

Processors 170, 180 may exchange information via the interface 150 using interface circuits 178, 188. IMCs 172 and 182 couple the processors 170, 180 to respective memories, namely a memory 132 and a memory 134, which may be portions of main memory locally attached to the respective processors.

Processors 170, 180 may each exchange information with a network interface (NW I/F) 190 via individual interfaces 152, 154 using interface circuits 176, 194, 186, 198. The network interface 190 (e.g., one or more of an interconnect, bus, and/or fabric, and in some examples is a chipset) may optionally exchange information with a coprocessor 138 via an interface circuit 192. In some examples, the coprocessor 138 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 170, 180 or outside of both processors, yet connected with the processors via an interface such as P-P interconnect, such that either or both processors' local cache information may be stored in the shared cache if a processor is placed into a low power mode.

Network interface 190 may be coupled to a first interface 116 via interface circuit 196. In some examples, first interface 116 may be an interface such as a Peripheral Component Interconnect (PCI) interconnect, a PCI Express interconnect, or another I/O interconnect. In some examples, first interface 116 is coupled to a power control unit (PCU) 117, which may include circuitry, software, and/or firmware to perform power management operations with regard to the processors 170, 180 and/or co-processor 138. PCU 117 provides control information to one or more voltage regulators (not shown) to cause the voltage regulator(s) to generate the appropriate regulated voltage(s). PCU 117 also provides control information to control the operating voltage generated. In various examples, PCU 117 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 117 is illustrated as being present as logic separate from the processor 170 and/or processor 180. In other cases, PCU 117 may execute on a given one or more of cores (not shown) of processor 170 or 180. In some cases, PCU 117 may be implemented as a microcontroller (dedicated or general-purpose) or other control logic configured to execute its own dedicated power management code, sometimes referred to as P-code. In yet other examples, power management operations to be performed by PCU 117 may be implemented externally to a processor, such as by way of a separate power management integrated circuit (PMIC) or another component external to the processor. In yet other examples, power management operations to be performed by PCU 117 may be implemented within BIOS or other system software. Along these lines, power management may be performed in concert with other power control units implemented autonomously or semi-autonomously, e.g., as controllers or executing software in cores, clusters, IP blocks and/or in other parts of the overall system.

Various I/O devices 114 may be coupled to first interface 116, along with a bus bridge 118 which couples first interface 116 to a second interface 120. In some examples, one or more additional processor(s) 115, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 116. In some examples, second interface 120 may be a low pin count (LPC) interface. Various devices may be coupled to second interface 120 including, for example, a keyboard and/or mouse 122, communication devices 127 and storage circuitry 128. Storage circuitry 128 may be one or more non-transitory machine-readable storage media as described below, such as a disk drive or other mass storage device which may include instructions/code and data 130 and may implement the storage 'ISAB03 in some examples. Further, an audio I/O 124 may be coupled to second interface 120. Note that other architectures than the point-to-point architecture described above are possible. For example, instead of the point-to-point architecture, a system such as multiprocessor system 100 may implement a multi-drop interface or other such architecture.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

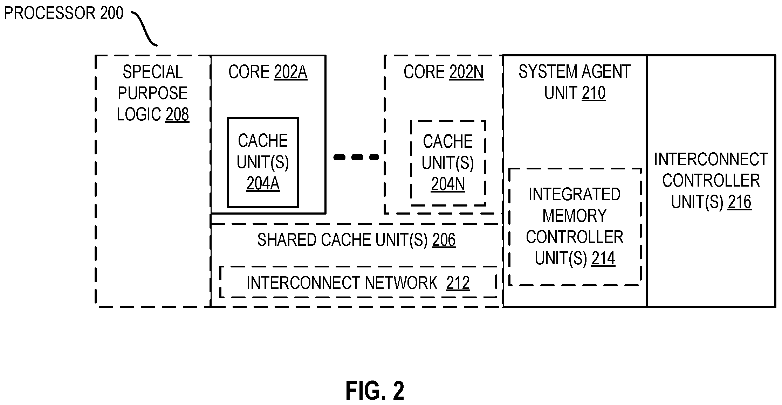

### FIG. 2 -Example Processor with Core(s)

FIG. 2 illustrates a block diagram of an example processor and/or SoC 200 that may have one or more cores and an integrated memory controller. The solid lined boxes illustrate a processor 200 with a single core 202(A), system agent unit circuitry 210, and a set of one or more interface controller unit(s) circuitry 216, while the optional addition of the dashed lined boxes illustrates an alternative processor 200 with multiple cores 202(A)-(N), a set of one or more integrated memory controller unit(s) circuitry 214 in the system agent unit circuitry 210, and special purpose logic 208, as well as a set of one or more interface controller units circuitry 216. Note that the processor 200 may be one of the processors 170 or 180, or co-processor 138 or 115 of FIG. 1.

Thus, different implementations of the processor 200 may include: 1) a CPU with the special purpose logic 208 being integrated graphics and/or scientific (throughput) logic (which may include one or more cores, not shown), and the cores 202(A)-(N) being one or more general purpose cores (e.g., general purpose in-order cores, general purpose out-of-order cores, or a combination of the two); 2) a coprocessor with the cores 202(A)-(N) being a large number of special purpose cores intended primarily for graphics and/or scientific (throughput); and 3) a coprocessor with the cores 202(A)-(N) being a large number of general purpose in-order cores. Thus, the processor 200 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 200 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 204(A)-(N) within the cores 202(A)-(N), a set of one or more shared cache unit(s) circuitry 206, and external memory (not shown) coupled to the set of integrated memory controller unit(s) circuitry 214. The set of one or more shared cache unit(s) circuitry 206 may include one or more mid-level caches, such as level 2 (L2), level 3 (L3), level 4 (L4), or other levels of cache, such as a last level cache (LLC), and/or combinations thereof. While in some examples interface network circuitry 212 (e.g., a ring interconnect) interfaces the special purpose logic 208 (e.g., integrated graphics logic), the set of shared cache unit(s) circuitry 206, and the system agent unit circuitry 210, alternative examples use any number of well-known techniques for interfacing such units. In some examples, coherency is maintained between one or more of the shared cache unit(s) circuitry 206 and cores 202(A)-(N). In some examples, interface controller units circuitry 216 couple the cores 202 to one or more other devices 218 such as one or more I/O devices, storage, one or more communication devices (e.g., wireless networking, wired networking, etc.), etc.

In some examples, one or more of the cores 202(A)-(N) are capable of multi-threading. The system agent unit circuitry 210 includes those components coordinating and operating cores 202(A)-(N). The system agent unit circuitry 210 may include, for example, power control unit (PCU) circuitry and/or display unit circuitry (not shown). The PCU may be or may include logic and components needed for regulating the power state of the cores 202(A)-(N) and/or the special purpose logic 208 (e.g., integrated graphics logic). The display unit circuitry is for driving one or more externally connected displays.

The cores 202(A)-(N) may be homogenous in terms of instruction set architecture (ISA). Alternatively, the cores 202(A)-(N) may be heterogeneous in terms of ISA; that is, a subset of the cores 202(A)-(N) may be capable of executing an ISA, while other cores may be capable of executing only a subset of that ISA or another ISA.

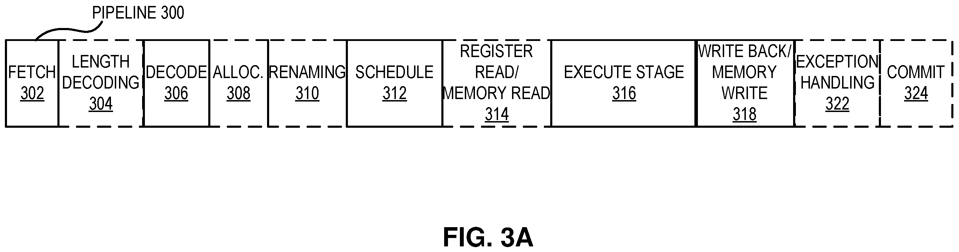

### FIGs. 3A-3B - Example Core Architectures

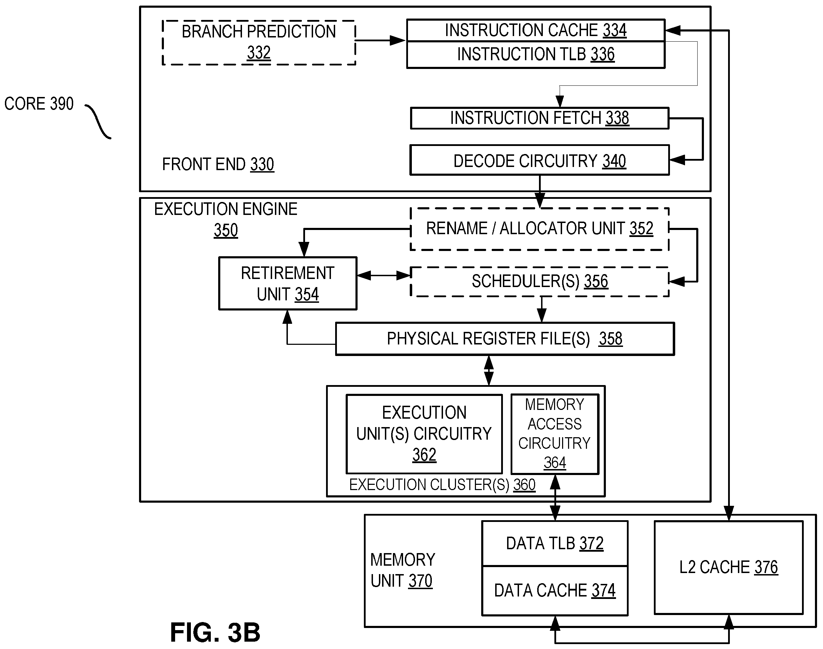

FIG. 3A is a block diagram illustrating both an example in-order pipeline and an example register renaming, out-of-order issue/execution pipeline according to examples. FIG. 3B is a block diagram illustrating both an example in-order architecture core and an example register renaming, out-of-order issue/execution architecture core to be included in a processor according to examples. The solid lined boxes in FIGS. 3A-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 3A, a processor pipeline 300 includes a fetch stage 302, an optional length decoding stage 304, a decode stage 306, an optional allocation (Alloc) stage 308, an optional renaming stage 310, a schedule (also known as a dispatch or issue) stage 312, an optional register read/memory read stage 314, an execute stage 316, a write back/memory write stage 318, an optional exception handling stage 322, and an optional commit stage 324. One or more operations can be performed in each of these processor pipeline stages. For example, during the fetch stage 302, one or more instructions are fetched from instruction memory, and during the decode stage 306, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 306 and the register read/memory read stage 314 may be combined into one pipeline stage. In one example, during the execute stage 316, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 3B may implement the pipeline 300 as follows: 1) the instruction fetch circuitry 338 performs the fetch and length decoding stages 302 and 304; 2) the decode circuitry 340 performs the decode stage 306; 3) the rename/allocator unit circuitry 352 performs the allocation stage 308 and renaming stage 310; 4) the scheduler(s) circuitry 356 performs the schedule stage 312; 5) the physical register file(s) circuitry 358 and the memory unit circuitry 370 perform the register read/memory read stage 314; the execution cluster(s) 360 perform the execute stage 316; 6) the memory unit circuitry 370 and the physical register file(s) circuitry 358 perform the write back/memory write stage 318; 7) various circuitry may be involved in the exception handling stage 322; and 8) the retirement unit circuitry 354 and the physical register file(s) circuitry 358 perform the commit stage 324.

FIG. 3B shows a processor core 390 including front-end unit circuitry 330 coupled to execution engine unit circuitry 350, and both are coupled to memory unit circuitry 370. The core 390 may be a reduced instruction set architecture computing (RISC) core, a complex instruction set architecture computing (CISC) core, a very long instruction word (VLIW) core, or a hybrid or alternative core type. As yet another option, the core 390 may be a special-purpose core, such as, for example, a network or communication core, compression engine, coprocessor core, general purpose computing graphics processing unit (GPGPU) core, graphics core, or the like.

The front-end unit circuitry 330 may include branch prediction circuitry 332 coupled to instruction cache circuitry 334, which is coupled to an instruction translation lookaside buffer (TLB) 336, which is coupled to instruction fetch circuitry 338, which is coupled to decode circuitry 340. In one example, the instruction cache circuitry 334 is included in the memory unit circuitry 370 rather than the front-end circuitry 330. The decode circuitry 340 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 340 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 340 may be implemented using various different mechanisms. Examples of suitable mechanisms include, but are not limited to, look-up tables, hardware implementations, programmable logic arrays (PLAs), microcode read only memories (ROMs), etc. In one example, the core 390 includes a microcode ROM (not shown) or other medium that stores microcode for certain macroinstructions (e.g., in decode circuitry 340 or otherwise within the front-end circuitry 330). In one example, the decode circuitry 340 includes a micro-operation (micro-op) or operation cache (not shown) to hold/cache decoded operations, micro-tags, or micro-operations generated during the decode or other stages of the processor pipeline 300. The decode circuitry 340 may be coupled to rename/allocator unit circuitry 352 in the execution engine circuitry 350.

The execution engine circuitry 350 includes the rename/allocator unit circuitry 352 coupled to retirement unit circuitry 354 and a set of one or more scheduler(s) circuitry 356. The scheduler(s) circuitry 356 represents any number of different schedulers, including reservations stations, central instruction window, etc. In some examples, the scheduler(s) circuitry 356 can include arithmetic logic unit (ALU) scheduler/scheduling circuitry, ALU queues, address generation unit (AGU) scheduler/scheduling circuitry, AGU queues, etc. The scheduler(s) circuitry 356 is coupled to the physical register file(s) circuitry 358. Each of the physical register file(s) circuitry 358 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 358 includes vector registers unit circuitry, writemask registers unit circuitry, and scalar register unit circuitry. These register units may provide architectural vector registers, vector mask registers, general-purpose registers, etc. The physical register file(s) circuitry 358 is coupled to the retirement unit circuitry 354 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 354 and the physical register file(s) circuitry 358 are coupled to the execution cluster(s) 360. The execution cluster(s) 360 includes a set of one or more execution unit(s) circuitry 362 and a set of one or more memory access circuitry 364. The execution unit(s) circuitry 362 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 356, physical register file(s) circuitry 358, and execution cluster(s) 360 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 364). It should also be understood that where separate pipelines are used, one or more of these pipelines may be out-of-order issue/execution and the rest in-order.

In some examples, the execution engine unit circuitry 350 may perform load store unit (LSU) address/data pipelining to an Advanced Microcontroller Bus (AMB) interface (not shown), and address phase and writeback, data phase load, store, and branches.

The set of memory access circuitry 364 is coupled to the memory unit circuitry 370, which includes data TLB circuitry 372 coupled to data cache circuitry 374 coupled to level 2 (L2) cache circuitry 376. In one example, the memory access circuitry 364 may include load unit circuitry, store address unit circuitry, and store data unit circuitry, each of which is coupled to the data TLB circuitry 372 in the memory unit circuitry 370. The instruction cache circuitry 334 is further coupled to the level 2 (L2) cache circuitry 376 in the memory unit circuitry 370. In one example, the instruction cache 334 and the data cache 374 are combined into a single instruction and data cache (not shown) in L2 cache circuitry 376, level 3 (L3) cache circuitry (not shown), and/or main memory. The L2 cache circuitry 376 is coupled to one or more other levels of cache and eventually to a main memory.

The core 390 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 390 includes logic to support a packed data instruction set architecture extension (e.g., AVX1, AVX2), thereby allowing the operations used by many multimedia applications to be performed using packed data.

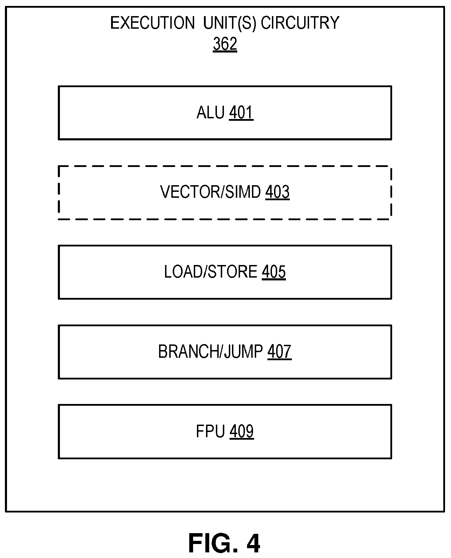

### FIG. 4 - Example Execution Unit(s) Circuitry

FIG. 4 illustrates examples of execution unit(s) circuitry, such as execution unit(s) circuitry 362 of FIG. 3B. As illustrated, execution unit(s) circuity 362 may include one or more ALU circuits 401, optional vector/single instruction multiple data (SIMD) circuits 403, load/store circuits 405, branch/jump circuits 407, and/or Floating-point unit (FPU) circuits 409. ALU circuits 401 perform integer arithmetic and/or Boolean operations. Vector/SIMD circuits 403 perform vector/SIMD operations on packed data (such as SIMD/vector registers). Load/store circuits 405 execute load and store instructions to load data from memory into registers or store from registers to memory. Load/store circuits 405 may also generate addresses. Branch/jump circuits 407 cause a branch or jump to a memory address depending on the instruction. FPU circuits 409 perform floating-point arithmetic. The width of the execution unit(s) circuitry 362 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

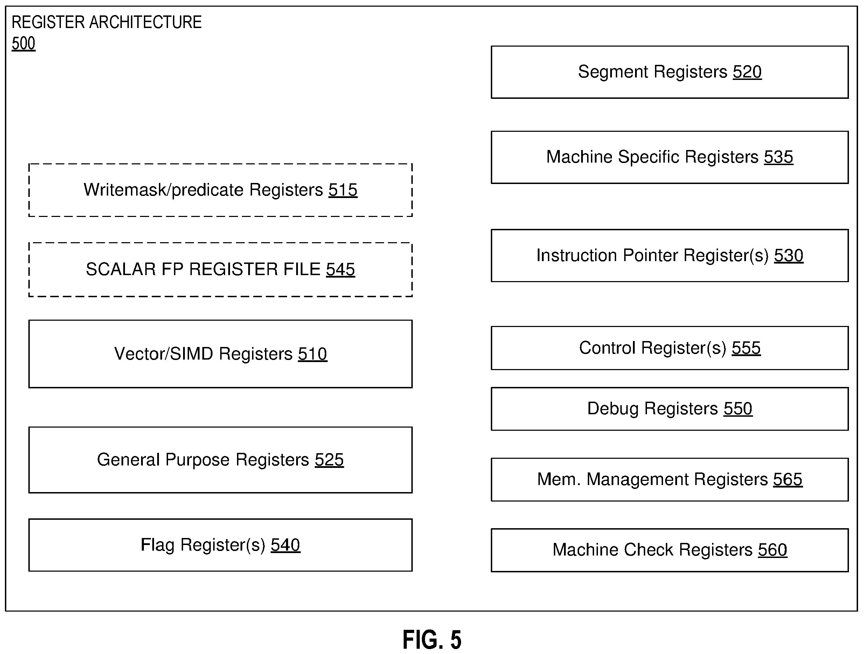

### FIG. 5 - Example Register Architecture

FIG. 5 is a block diagram of a register architecture 500 according to some examples. As illustrated, the register architecture 500 includes vector/SIMD registers 510 that vary from 128-bit to 1,024 bits width. In some examples, the vector/SIMD registers 510 are physically 512-bits and, depending upon the mapping, only some of the lower bits are used. For example, in some examples, the vector/SIMD registers 510 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 500 includes writemask/predicate registers 515. For example, in some examples, there are 8 writemask/predicate registers (sometimes called k0 through k7) that are each 16-bit, 32-bit, 64-bit, or 128-bit in size. Writemask/predicate registers 515 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 515 corresponds to a data element position of the destination. In other examples, the writemask/predicate registers 515 are scalable and consists of a set number of enable bits for a given vector element (e.g., 8 enable bits per 64-bit vector element).

The register architecture 500 includes a plurality of general-purpose registers 525. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 500 includes scalar floating-point (FP) register file 545 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 540 (e.g., EFLAGS, RFLAGS, etc.) store status and control information for arithmetic, compare, and system operations. For example, the one or more flag registers 540 may store condition code information such as carry, parity, auxiliary carry, zero, sign, and overflow. In some examples, the one or more flag registers 540 are called program status and control registers.

Segment registers 520 contain segment points for use in accessing memory. In some examples, these registers are referenced by the names CS, DS, SS, ES, FS, and GS.

Machine specific registers (MSRs) 535 control and report on processor performance. Most MSRs 535 handle system-related functions and are not accessible to an application program. Machine check registers 560 consist of control, status, and error reporting MSRs that are used to detect and report on hardware errors.

One or more instruction pointer register(s) 530 store an instruction pointer value. Control register(s) 555 (e.g., CR0-CR4) determine the operating mode of a processor (e.g., processor 170, 180, 138, 115, and/or 200) and the characteristics of a currently executing task. Debug registers 550 control and allow for the monitoring of a processor or core's debugging operations.

Memory (mem) management registers 565 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 500 may, for example, be used in register file/memory, or physical register file(s) circuitry 358 (shown in FIG. 3B).

### Power Management for Battery Group

### FIGs. 6A-6B - Example systems

FIG. 6A shows a block diagram of an example computing system 600, in accordance with one or more embodiments. In some embodiments, the computing system 600 may be all or a portion of a computing device. For example, the computing system 600 may be a cellular telephone, a computer, a server, a network device, a system on a chip (SoC), a controller, a distributed system, and so forth.

As shown in FIG. 6A, the computing system 600 may include a processor 610, memory 620, storage 630, power supply 640, and multiple battery packs 650A-650N (also referred to herein as "battery packs 650"). Further, although not shown in FIG. 6A, the computing system 600 may include other components.

In one or more embodiments, the memory 620 can be implemented with any type(s) of computer memory (e.g., dynamic random-access memory (DRAM), static random-access memory (SRAM), non-volatile memory (NVM), a combination of DRAM and NVM, etc.). In some embodiments, the storage 630 may include non-transitory storage media such as hard drives, flash storage, optical disks, etc. The storage 630 may store system software (e.g., operating system, drivers, power management code, and so forth).

In one or more embodiments, the processor 610 may be a hardware processing device (e.g., a central processing unit (CPU), a System on a Chip (SoC), and so forth). The processor 610 may include internal components (not shown in FIG. 6A), such as processing engines, graphics processing engines, math processing engines, encryption processing engines, network processing engines, memory devices, network devices, storage devices, bus devices, and so forth.

In one or more embodiments, the power supply 640 receives external power (e.g., from a wall electrical outlet, a wall adapter, and so forth), and may convert the external power into an internal power used by the computing system 600. For example, the power supply 640 may provide the internal power to system load components (e.g., processor 610, memory 620, storage 630) during operation of the computing system 600. Further, the power supply 640 may provide the internal power to recharge the battery packs 650.

Referring now to FIG. 6B, shown is an example battery pack 650, in accordance with one or more embodiments. As shown, the battery pack 650 may include module control circuitry 652 and energy storage cell 655. In some embodiments, the energy storage cell 655 may be recharged by receiving a power input, and may be discharged to power the system load components (e.g., processor 610, memory 620, storage 630) during operation of the computing system 600. For example, the energy storage cell 655 may be implemented using lithium-ion technology, nickel-cadmium technology, nickel-metal hydride technology, and so forth.

In some embodiments, the module control circuitry 652 may monitor the voltage level of the energy storage cell 655. For example, the module control circuitry 652 may detect a trigger event (e.g., a signal or command, a periodic timer, a system interrupt, and so forth), and in response may determine the voltage level of the energy storage cell 655. Further, when the battery pack 650 is being discharged for a power load (e.g., to power the system load components), the module control circuitry 652 may include a protection circuit to determine when the discharge voltage of the battery pack 650 has fallen below a predefined minimum discharge voltage, and in response may shut down the battery pack 650. Furthermore, when the battery pack 650 is being charged (e.g., by an external power supply), the protection circuit may determine when the charging voltage supplied to the battery pack 650 has exceeded a predefined maximum charging voltage, and in response may shut down the battery pack 650.

In one or more embodiments, when the battery pack 650 is being discharged for a power load, the module control circuitry 652 may use the monitored voltage level to determine the power discharge capability of the battery pack 650. The power discharge capability may be calculated as a current level (e.g., measured in amps), as a power level (e.g., measured in watts), and so forth. In some embodiments, the power discharge capability may be calculated as a voltage margin (i.e., the monitored voltage level minus the minimum discharge voltage) divided by the impedance of the battery pack 650. It is contemplated that other determinations and/or calculations of the power discharge capability are possible (e.g., as a power amount measured in watts, etc.).

In some embodiments, when the battery pack 650 is being charged, the module control circuitry 652 may determine the power charging capability of the battery pack 650. The power charging capability may be determined as a current level, as a voltage level, as a power amount, and so forth. In some embodiments, the power charging capability may be calculated as a voltage margin (i.e., the maximum charging voltage minus the monitored voltage level) divided by the impedance of the battery pack 650. It is contemplated that other determinations and/or calculations of the power charging capability are possible (e.g., as a power amount measured in watts, etc.).

In one or more embodiments, the module control circuitry 652 may determine the impedance of the battery pack 650. For example, the module control circuitry 652 may include circuitry to determine the impedance of the battery pack 650 based on electrical measurements. In another example, the module control circuitry 652 may include stored data indicating the impedance of the battery pack 650 (e.g., based on measurement or testing by a manufacturer of the battery pack 650).

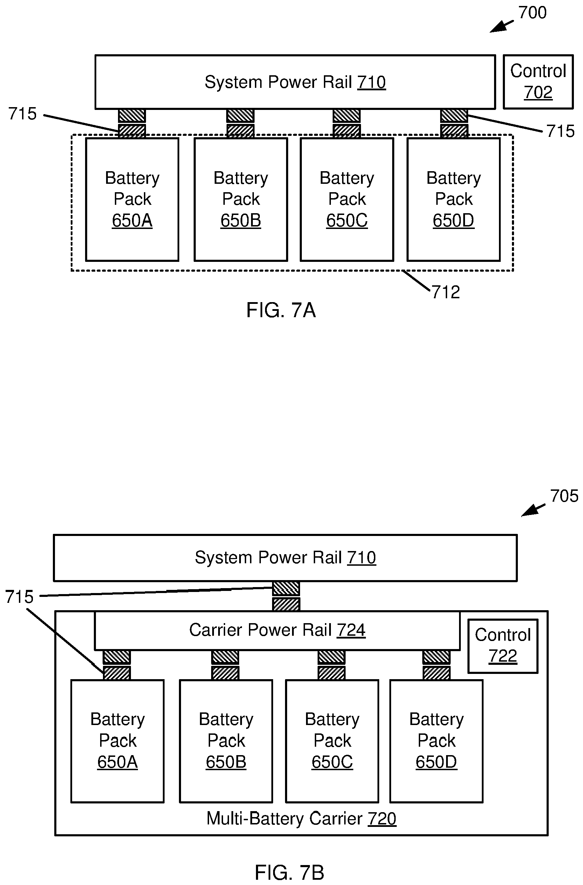

Referring again to FIG. 6A, in some embodiments, the battery packs 650A-650N may form a battery grouping arranged in one or more series connections to provide stored electrical for the computing system 600. For example, when the power supply 640 is not connected to or receiving external power (e.g., is not plugged into a wall adapter or outlet), the system load components may be powered by the combined power output (e.g., discharge) of the multiple battery packs 650. Some example embodiments of battery groupings are discussed further below with reference to FIGs. 7A-7B.

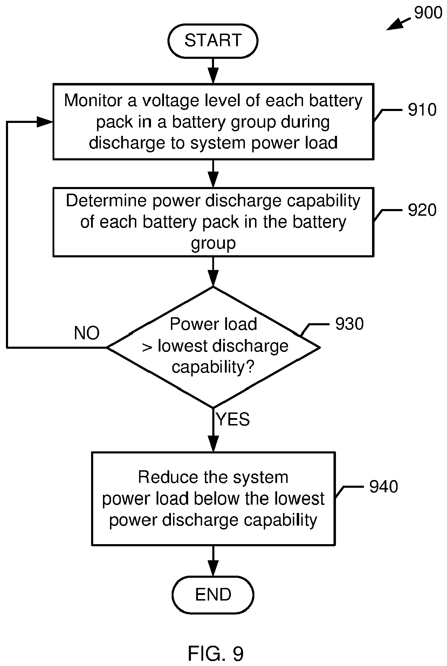

In some embodiments, the computing system 600 may include control logic (e.g., circuitry, software executed by a processor, firmware, etc.) to monitor the power discharge capability of each of the battery packs 650A-650N, and to identify the lowest power discharge capability of the battery packs 650A-650N. Further, the control logic may determine whether the power load of the computing system 600 (i.e., the power consumed by the components of system 600) exceeds the lowest power discharge capability. If so, the control logic may reduce the power load to not exceed the lowest power discharge capability. For example, the control logic may reduce the clock frequency or supply voltage used during a high performance state (e.g., a "turbo" mode) of the processor 610. In this manner, the control logic may reduce the likelihood that the system power supply is interrupted due to disabling one of the battery packs 650. An example method for controlling the power load based on the lowest power discharge capability is discussed further below with reference to FIG. 9.

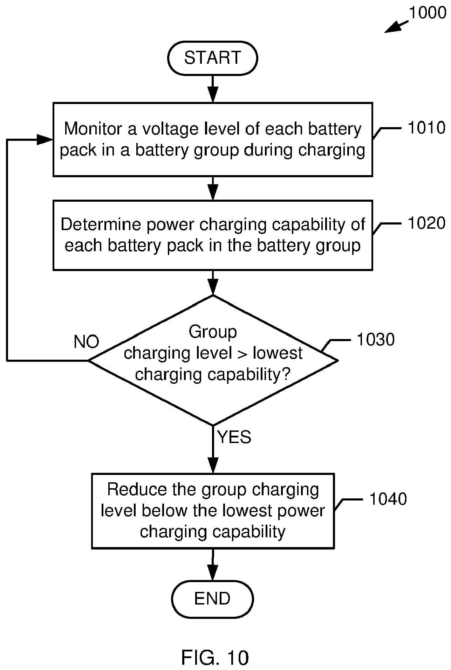

In some embodiments, the control logic may monitor the power charging capability of each of the battery packs 650A-650N, and may identify the lowest power charging capability of the battery packs 650A-650N. Further, the control logic may determine whether the charging current supplied to the battery pack 650 exceeds the lowest power charging capability. If so, the control logic may reduce the charging current to not exceed the lowest power charging capability. In this manner, the control logic may reduce the likelihood one of the battery packs may be disabled during charging. An example method for controlling the charging current based on the lowest power charging capability is discussed further below with reference to FIG. 10.

### FIGs. 7A-7B - Example systems

FIG. 7A shows a block diagram of an example system 700, in accordance with one or more embodiments. As shown, the system 700 may include a system power rail 710 to be coupled to a battery grouping 712 including battery packs 650A-650D. For example, in some embodiments, each battery pack 650 may include a connector 715 to be electrically coupled to a matching connector 715 on the system power rail 710. In some embodiments, the system power rail 710 may connect the battery packs 650A-650D in a series connection. In this manner, the power outputs of the battery packs 650A-650D may be combined to provide a single power source for the system 700.

In one or more embodiments, each battery pack 650 may be physically inserted and/or mounted in a battery slot or bay of the system 700. As such, each of the battery packs 650A-650D may be separately inserted or removed from the system 700 (e.g., by a user manually inserting a battery pack 650 into an empty battery slot of the system 700.

In some embodiments, the system 700 may include a control circuit 702 to determine whether a power load of the system 700 exceeds the lowest power discharge capability of the battery packs 650A-650D. If so, the control circuit 702 may reduce the power load of the system 700 to not exceed the lowest power discharge capability.

Referring now to FIG. 7B, in other embodiments, the battery packs 650A-650D may be physically mounted or attached to a multi-battery carrier 720. For example, the multi-battery carrier 720 may include a chassis or enclosure that can be attached to (or inserted into) the system 700 (e.g., in a corresponding slot or bay of the system 705).

In some embodiments, the multi-battery carrier 720 may include a carrier power rail 724 and a control circuit 722. As shown, the carrier power rail 724 may be electrically coupled to the battery packs 650A-650D. In some embodiments, the carrier power rail 724 may connect the battery packs 650A-650D in a series connection. Further, the multi-battery carrier 720 may be electrically coupled to the system power rail 710 (e.g., via two connectors 715). In this manner, the power outputs of the battery packs 650A-650D may be combined to provide a single power source for the system 705.

In some embodiments, the control circuit 722 may determine whether a power load of the system 702 exceeds the lowest power discharge capability of the battery packs 650A-650D. If so, the control circuit 722 may reduce the power load of the system 702 to not exceed the lowest power discharge capability.

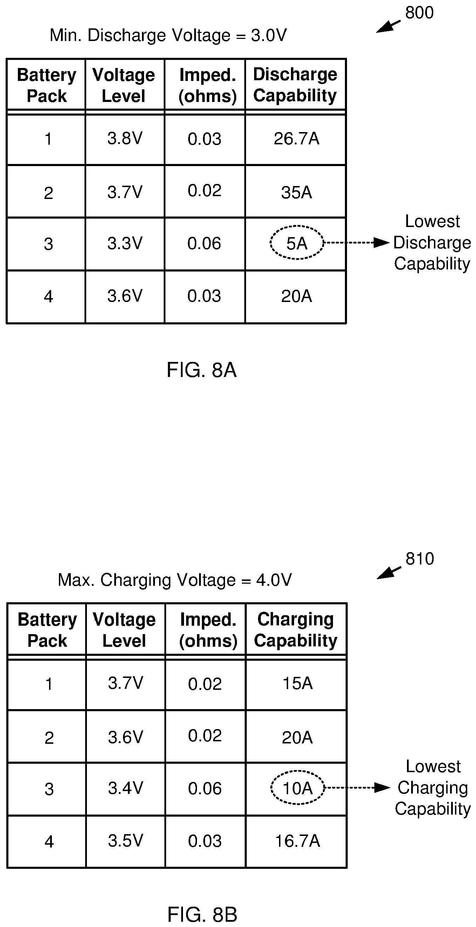

### FIGs. 8A-8B - Example calculations

FIGs. 8A-8B show example calculations 800 and 810, in accordance with one or more embodiments. In particular, the example calculation 800 may be performed to determine the lowest power discharge capability of a grouping of battery packs (e.g., battery grouping 712 shown in FIG. 7A). Further, the example calculation 810 may be performed to determine the lowest power charging capability of a grouping of battery packs.

Referring now to FIG. 8A, the example calculation 800 may include dividing a voltage margin (i.e., the monitored voltage level minus the minimum discharge voltage) by the impedance of the battery pack. For example, as shown in FIG. 8A, each of the battery packs 1-4 has a minimum discharge voltage of 3.0V (volts). Further, the battery pack 3 has a voltage level of 3.3V and an impedance of 0.06 ohms. Accordingly, the power discharge capability of battery pack 3 is calculated as (3.3 - 3.0)/0.06, and is thereby equal to 5 amps. Stated differently, if the current drawn from the battery pack 650 exceeds 5 amps, the battery pack 650 will drop below the minimum discharge voltage, thereby causing the protection circuit to shut down the battery pack 650. Further, this is the lowest power discharge capability of the battery packs 1-4, and is therefore used to limit the load power that is drawn from the grouping of the battery packs 1-4.

Referring now to FIG. 8B, the example calculation 810 may include dividing a voltage margin (i.e., the maximum charging voltage minus the monitored voltage level) by the impedance of the battery pack 650. For example, as shown in FIG. 8B, each of the battery packs 1-4 has a maximum charging voltage of 4.0V (volts). Further, the battery pack 3 has a voltage level of 3.4V and an impedance of 0.06 ohms. Accordingly, the power charging capability of battery pack 3 is calculated as (4.0 - 3.4)/0.06, and is thereby equal to 10 amps. Stated differently, if the charging current supplied to the battery pack 650 exceeds 10 amps, the battery pack 650 will exceed the maximum charging voltage, thereby causing the protection circuit to shut down the battery pack 650. Further, this is the lowest power charging capability of the battery packs 1-4, and is therefore used to limit the charging current that is supplied to the grouping of the battery packs 1-4.

The calculations 800 and/or 810 may be performed by control logic of an electrical device or system. For example, in some embodiments, the calculations 800 and/or 810 may be performed by one or more of the control circuit 702 (shown in FIG. 7A), the control circuit 722 (shown in FIG. 7B), the module control circuitry 652 (shown in FIG. 6B), the processor 610 (shown in FIG. 6A), or any other controller or circuitry. Further, in some embodiments, the calculations 800 and/or 810 may be performed by software or firmware instruction executed by a processor or controller, may be performed by a remote system or network service, and so forth.

In some embodiments, the calculations 800 and/or 810 may be performed in response to a trigger event. For example, the calculations 800 and/or 810 may be performed in response to a signal, a user command, a periodic timer, a system interrupt, and the like. Further, the calculations 800 and/or 810 may be performed in response to a change or replacement of a battery pack 650 in a battery group (e.g., after a "hot swap" of a battery pack 650 in the multi-battery carrier 720).

In some embodiments, the calculations 800 and/or 810 may be modified and/or expanded to consider the battery longevity impact on each battery pack 650. For example, the example calculation 800 may be performed to determine the lowest power discharge capability of a grouping of battery packs. Further, the longevity impact of changing the power discharge level for each battery pack 650 may be determined (e.g., based on degradation due to elevated load levels). Furthermore, the load level may be selected to reduce the longevity impact and the power discharge impact to the battery packs 650.

### FIG. 9 - Example method

FIG. 9 shows a flow diagram of an example method 900 for controlling a power load based on the lowest power discharge capability of a group of battery packs, in accordance with one or more embodiments. In various embodiments, the method 900 may be performed by processing logic that may include hardware (e.g., processing device, circuitry, dedicated logic, programmable logic, microcode, etc.), software (e.g., instructions run on a processing device), or a combination thereof. For example, the method 900 may be performed by one or more of the control circuit 702 (shown in FIG. 7A), the control circuit 722 (shown in FIG. 7B), the module control circuitry 652 (shown in FIG. 6B), the processor 610 (shown in FIG. 6A), or any other controller or circuitry. Further, in some embodiments, the method 900 may be performed by software or firmware instruction executed by a processor or controller. Such computer executed instructions may be stored in a non-transitory machine readable medium, such as an optical, semiconductor, or magnetic storage device. The machine-readable medium may store data, which if used by at least one machine, causes the at least one machine to fabricate at least one integrated circuit to perform a method.

Block 910 may include monitoring a voltage level of each battery pack in a battery group during discharge to a system power load. Block 920 may include determining the power discharge capability of each battery pack in the battery group. Decision block 930 may include determining whether the system power load exceeds the lowest power discharge capability of the battery group. If not ("NO"), the method 900 may return to block 910 (e.g., to continue monitoring the charge states in the battery group). Otherwise, if it is determined at decision block 930 that the system power load exceeds the lowest power discharge capability of the battery group ("YES"), the method 900 may continue at block 940, including reducing the system power load below the lowest power discharge capability. After block 940, the method 900 may be completed.

For example, referring to FIGs. 6A-7A, the module control circuitry 652 in each battery pack 650 determines the voltage level of the corresponding battery pack 650. The control circuit 702 determines the power discharge capability of each of the battery packs 650, and identifies the lowest power discharge capability of the battery packs 650. Further, the control circuit 702 determines that the power load of the computing system 600 exceeds the lowest power discharge capability, and in response may cause a reduction of the system power load to not exceed (e.g., to less than) the lowest power discharge capability. For example, the control circuit 702 may cause a reduction of the clock frequency or supply voltage used during a high performance state (e.g., a "turbo" mode) of the processor 610.

### FIG. 10 - Example method

FIG. 10 shows a flow diagram of an example method 1000 for controlling a charging level based on the lowest power charging capability of a group of battery packs, in accordance with one or more embodiments. In various embodiments, the method 1000 may be performed by processing logic that may include hardware (e.g., processing device, circuitry, dedicated logic, programmable logic, microcode, etc.), software (e.g., instructions run on a processing device), or a combination thereof. For example, the method 1000 may be performed by one or more of the control circuit 702 (shown in FIG. 7A), the control circuit 722 (shown in FIG. 7B), the module control circuitry 652 (shown in FIG. 6B), the processor 610 (shown in FIG. 6A), or any other controller or circuitry. Further, in some embodiments, the method 1000 may be performed by software or firmware instruction executed by a processor or controller. Such computer executed instructions may be stored in a non-transitory machine readable medium, such as an optical, semiconductor, or magnetic storage device. The machine-readable medium may store data, which if used by at least one machine, causes the at least one machine to fabricate at least one integrated circuit to perform a method.

Block 1010 may include monitoring a voltage level of each battery pack in a battery group during charging. Block 1020 may include determining the power charging capability of each battery pack in the battery group. Decision block 1030 may include determining whether the group charging level exceeds the lowest power charging capability of the battery group. If not ("NO"), the method 1000 may return to block 1010 (e.g., to continue monitoring the charge states in the battery group). Otherwise, if it is determined at decision block 1030 that the group charging level exceeds the lowest power charging capability of the battery group ("YES"), the method 1000 may continue at block 1040, including reducing the group charging level below the lowest power charging capability. After block 1040, the method 1000 may be completed.

For example, referring to FIGs. 6A-7A, the module control circuitry 652 in each battery pack 650 determines the voltage level of the corresponding battery pack 650. The control circuit 702 determines the power charging capability of each of the battery packs 650, and identifies the lowest power charging capability of the battery packs 650. Further, the control circuit 702 determines that the charging level (e.g., amount of current or power) applied to the battery grouping 712 exceeds the lowest power charging capability, and in response may cause a reduction of the charging level applied to the battery grouping 712 to not exceed (e.g., to less than) the lowest power charging capability. For example, the control circuit 702 may cause a reduction of the constant current (CC) supplied to charge the battery grouping 712.

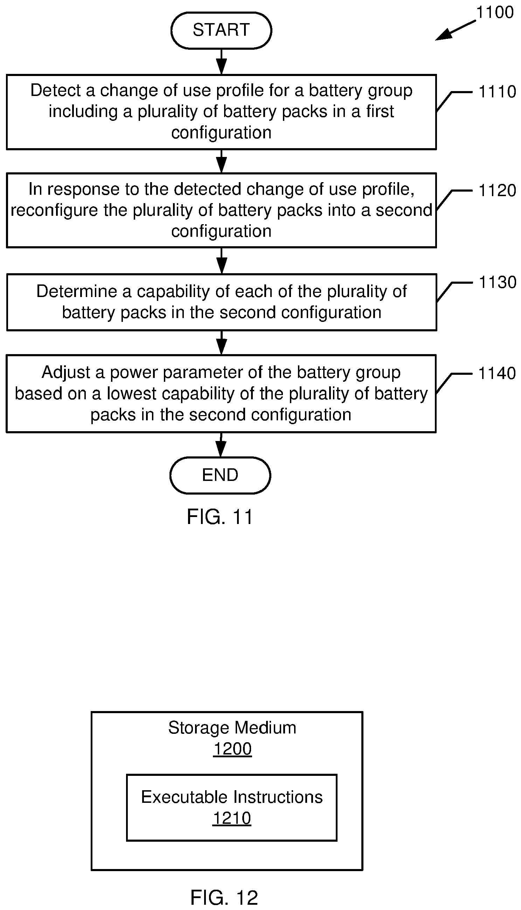

### FIG. 11 - Example method

FIG. 11 shows a flow diagram of an example method 1100 for controlling a power load based on a configuration and the discharge capabilities of a group of battery packs, in accordance with one or more embodiments. In various embodiments, the method 1100 may be performed by processing logic that may include hardware (e.g., processing device, circuitry, dedicated logic, programmable logic, microcode, etc.), software (e.g., instructions run on a processing device), or a combination thereof. For example, the method 1100 may be performed by one or more of the control circuit 702 (shown in FIG. 7A), the control circuit 722 (shown in FIG. 7B), the module control circuitry 652 (shown in FIG. 6B), the processor 610 (shown in FIG. 6A), or any other controller or circuitry. Further, in some embodiments, the method 1100 may be performed by software or firmware instruction executed by a processor or controller. Such computer executed instructions may be stored in a non-transitory machine readable medium, such as an optical, semiconductor, or magnetic storage device. The machine-readable medium may store data, which if used by at least one machine, causes the at least one machine to fabricate at least one integrated circuit to perform a method.

Block 1110 may include detecting a change of use profile for a battery group including a plurality of battery packs in a first configuration. Block 1120 may include, in response to the detected change of use profile, reconfiguring the plurality of battery packs into a second configuration. Block 1130 may include determining a capability of each of the plurality of battery packs in the second configuration. Block 1140 may include adjusting a power parameter of the battery group based on a lowest capability of the plurality of battery packs in the second configuration. After block 1140, the method 1100 may be completed.

For example, referring to FIGs. 6A-7A, a user may select between various use profiles for the computing system 600. For example, in some implementations, a first use profile may select maximum performance for the computing system 600, a second use profile may select maximum power efficiency for the computing system 600, and so forth. In some embodiments, the control circuit 702 may configure the battery grouping 712 based on the selected use profile. For example, the control circuit 702 may modify power connections to configure the battery grouping 712 as a single path including the four battery packs 650 connected in series. In another example, the control circuit 702 may configure the battery grouping 712 as two parallel paths, with each path including two battery packs 650 connected in series. Other configurations are possible. Further, after reconfiguring the battery grouping 712, the control circuit 702 determines the lowest power discharge capability of the battery packs 650 based on the new configuration. The control circuit 702 then determines that the load level exceeds the lowest power discharge capability, and in response causes a reduction of the load level for the battery grouping 712.

### FIG. 12 - Example storage medium

Referring now to FIG. 12, shown is a storage medium 1200 storing executable instructions 1210. In some embodiments, the storage medium 1200 may be a non-transitory machine-readable medium, such as an optical medium, a semiconductor, a magnetic storage device, and so forth. The executable instructions 1210 may be executable by a processing device to perform the methods shown in FIGs. 9-11. Further, the executable instructions 1210 may be used by at least one machine to fabricate at least one integrated circuit to perform the methods shown in FIGs. 9-11.

The following clauses and/or examples pertain to further embodiments.

In Example 1, a system may include at least one system component associated with a power load, a battery group, and a control circuitry. The battery group may include a plurality of battery packs connected in at least one series connection. The control circuitry may be to: monitor a voltage level of each battery pack in the battery group during a discharge to the power load of the at least one system component; determine a plurality of discharge capabilities of the battery group, each discharge capability corresponding to a different battery pack in the battery group; determine whether the power load of the at least one system component exceeds a lowest discharge capability of the plurality of discharge capabilities of the battery group; and in response to a determination that the power load of the at least one system component exceeds the lowest discharge capability of the plurality of discharge capabilities of the battery group, reduce the power load of the at least one system component below the lowest discharge capability of the plurality of discharge capabilities of the battery group.

In Example 2, the subject matter of Example 1 may optionally include that the control circuitry is to: determine voltage levels of the plurality of battery packs during charging of the battery group; determine a plurality of charging capabilities of the battery group based on the determined voltage levels; determine whether a charging level of the battery group exceeds a lowest charging capability of the plurality of charging capabilities of the battery group; and in response to a determination that the charging level of the battery group exceeds the lowest charging capability of the plurality of charging capabilities of the battery group, reduce the charging level of the battery group below the lowest charging capability of the plurality of charging capabilities of the battery group.

In Example 3, the subject matter of Examples 1-2 may optionally include that the control circuitry is to: detect a change of use profile for the plurality of battery packs in a first configuration; in response to the detected change of use profile, reconfigure the plurality of battery packs into a second configuration; determine an updated lowest discharge capability for the plurality of battery packs in the second configuration; and reduce the power load of the at least one system component below the updated lowest discharge capability for the plurality of battery packs in the second configuration.

In Example 4, the subject matter of Examples 1-3 may optionally include that the plurality of battery packs of the battery group are mounted in a multi-battery carrier, and that the multi-battery carrier is mounted in a battery bay of the system.

In Example 5, the subject matter of Examples 1-4 may optionally include that the multi-battery carrier comprises a carrier power rail to connect the plurality of battery packs in the at least one series connection, and that the multi-battery carrier further comprises carrier control circuitry to determine the lowest discharge capability of the plurality of battery packs.

In Example 6, the subject matter of Examples 1-5 may optionally include that each battery pack of the plurality of battery packs includes module control circuitry to: monitor the voltage level of the battery pack; determine whether a discharge voltage of the battery pack is lower than a predefined minimum discharge voltage; and in response to a determination that the discharge voltage of the battery pack is lower than the predefined minimum discharge voltage, shut down the battery pack.

In Example 7, the subject matter of Examples 1-6 may optionally include that the module control circuitry is further to determine an impedance of the battery pack, and that the at least one system component includes at least one selected from a processor device, a memory device, a storage device, a networking device, a display device, and a radio device.

In Example 8, the subject matter of Examples 1-7 may optionally include that the module control circuitry further to calculate the discharge capability of the battery pack based on: the monitored voltage level of the battery pack; the predefined minimum discharge voltage; and the impedance of the battery pack.

In Example 9, a computing device may include a battery group, a processor, a memory, and a machine-readable storage storing instructions. The battery group may include a plurality of battery packs connected in at least one series connection. The stored instructions may be executable by the processor to: monitor a voltage level of each battery pack in the battery group during a discharge to a power load; determine a plurality of discharge capabilities of the battery group, each discharge capability corresponding to a different battery pack in the battery group; determine a lowest discharge capability of the plurality of discharge capabilities of the battery group; and in response to a determination that the power load exceeds the lowest discharge capability of the plurality of discharge capabilities of the battery group, reduce the power load to less than the lowest discharge capability of the plurality of discharge capabilities of the battery group lowest discharge capability of the plurality of discharge capabilities of the battery group.

In Example 10, the subject matter of Example 9 may optionally include instructions executable by the processor to: during charging of the battery group, determine a charging capability of each battery pack in the battery group; and in response to a determination that a charging level of the battery group exceeds a lowest charging capability of the plurality of battery packs in the battery group, reduce the charging level of the battery group to less than the lowest charging capability.

In Example 11, the subject matter of Examples 9-10 may optionally include instructions executable by the processor to: detect a change of use profile for the plurality of battery packs in a first configuration; in response to the detected change of use profile, reconfigure the plurality of battery packs into a second configuration; determine a lowest discharge capability for the plurality of battery packs in the second configuration; and reduce the power load to less than the lowest discharge capability for the plurality of battery packs in the second configuration.

In Example 12, the subject matter of Examples 9-11 may optionally include that the plurality of battery packs of the battery group are mounted in a multi-battery carrier, and that the multi-battery carrier is mounted in a battery bay of the system.

In Example 13, the subject matter of Examples 9-12 may optionally include that the multi-battery carrier comprises a carrier power rail to connect the plurality of battery packs in the at least one series connection, and that the multi-battery carrier further comprises carrier control circuitry to determine the lowest discharge capability of the plurality of battery packs.

In Example 14, the subject matter of Examples 9-13 may optionally include that each battery pack of the plurality of battery packs includes module control circuitry to: determine an impedance of the battery pack; determine the voltage level of the battery pack; determine whether a discharge voltage of the battery pack is lower than a predefined minimum discharge voltage; and in response to a determination that the discharge voltage of the battery pack is lower than the predefined minimum discharge voltage, shut down the battery pack.

In Example 15, the subject matter of Examples 9-10 may optionally include that the module control circuitry is further to calculate the discharge capability of the battery pack based on: the monitored voltage level of the battery pack; the predefined minimum discharge voltage; and the impedance of the battery pack.

In Example 16, a multi-battery carrier may include: an enclosure to be inserted into a battery bay of a computing system, a carrier power rail to be electrically coupled to a plurality of battery packs mounted in the multi-battery carrier, and control circuitry. The control circuitry may be to: determine a discharge capability of each battery pack of the plurality of battery packs mounted in the multi-battery carrier; determine whether a power load of the computing system exceeds a lowest discharge capability of the plurality of battery packs mounted in the multi-battery carrier; and in response to a determination that the power load of the computing system exceeds the lowest discharge capability of the plurality of battery packs mounted in the multi-battery carrier, reduce the power load of the computing system below the lowest discharge capability of the plurality of battery packs mounted in the multi-battery carrier.

In Example 17, the subject matter of Example 16 may optionally include that the control circuitry is to: monitor the voltage level of each battery pack of the plurality of battery packs mounted in the multi-battery carrier; determine a charging capability of each battery pack of the plurality of battery packs mounted in the multi-battery carrier; determine whether a charging level of the multi-battery carrier exceeds a lowest charging capability of the plurality of battery packs mounted in the multi-battery carrier; and in response to a determination that the charging level of the multi-battery carrier exceeds the lowest charging capability of the plurality of battery packs mounted in the multi-battery carrier, reduce the charging level of the multi-battery carrier below the lowest charging capability of the plurality of battery packs mounted in the multi-battery carrier.

In Example 18, the subject matter of Examples 16-17 may optionally include that the control circuitry is to: detect a change of use profile for the plurality of battery packs in a first configuration; in response to the detected change of use profile, reconfigure the plurality of battery packs into a second configuration; determine a lowest discharge capability for the plurality of battery packs in the second configuration; and reduce the power load of the computing system below the lowest discharge capability for the plurality of battery packs in the second configuration.

In Example 19, the subject matter of Examples 16-18 may optionally include that each battery pack of the plurality of battery packs includes module control circuitry to: determine an impedance of the battery pack; determine the voltage level of the battery pack; determine whether a discharge voltage of the battery pack is lower than a predefined minimum discharge voltage; and in response to a determination that the discharge voltage of the battery pack is lower than the predefined minimum discharge voltage, shut down the battery pack.

In Example 20, the subject matter of Examples 16-19 may optionally include that the module control circuitry is further to calculate the discharge capability of the battery pack based on: the monitored voltage level of the battery pack; the predefined minimum discharge voltage; and the impedance of the battery pack.

In Example 21, a method may include: monitoring voltage levels of a plurality of battery packs during a discharge to a power load, wherein the plurality of battery packs are included in a battery group and are connected in at least one series connection; determining a plurality of discharge capabilities of the battery group, each discharge capability corresponding to a different battery pack in the battery group; determining whether the power load exceeds a lowest discharge capability of the plurality of discharge capabilities of the battery group; and in response to a determination that the power load exceeds the lowest discharge capability of the plurality of discharge capabilities of the battery group, reducing the power load to less than the lowest discharge capability of the plurality of discharge capabilities of the battery group.

In Example 22, the subject matter of Example 21 may optionally include determining the voltage levels of the plurality of battery packs during charging of the battery group; determining a plurality of charging capabilities of the battery group based on the determined voltage levels; determining whether a charging level of the battery group exceeds a lowest charging capability of the plurality of charging capabilities of the battery group; and in response to a determination that the charging level of the battery group exceeds the lowest charging capability of the plurality of charging capabilities of the battery group, reducing the charging level of the battery group to less than the lowest charging capability of the plurality of charging capabilities of the battery group.

In Example 23, the subject matter of Examples 21-22 may optionally include: detecting a change of use profile for the plurality of battery packs in a first configuration; in response to the detected change of use profile, reconfiguring the plurality of battery packs into a second configuration; determining an updated lowest discharge capability for the plurality of battery packs in the second configuration; and reducing the power load to less than the updated lowest discharge capability for the plurality of battery packs in the second configuration.

In Example 24, the subject matter of Examples 21-23 may optionally include, for each battery pack of the battery group: monitoring the voltage level of the battery pack; determining whether a discharge voltage of the battery pack is lower than a predefined minimum discharge voltage; and in response to a determination that the discharge voltage of the battery pack is lower than the predefined minimum discharge voltage, shutting down the battery pack.

In Example 25, the subject matter of Examples 21-24 may optionally include, for each battery pack of the battery group, calculating the discharge capability of the battery pack based on: the monitored voltage level of the battery pack; the predefined minimum discharge voltage; and the impedance of the battery pack.

In Example 26, an electronic device may include means for performing the method of any of Examples 21 to 25.

In Example 27, a computing device may include: one or more processors; and a memory having stored therein a plurality of instructions that when executed by the one or more processors, cause the computing device to perform the method of any of Examples 21 to 25.

In Example 28, at least one machine-readable medium may have stored thereon data which, if used by at least one machine, causes the at least one machine to perform the method of any of Examples 21 to 25.

In Example 29, an apparatus may include: means for monitoring voltage levels of a plurality of battery packs during a discharge to a power load, wherein the plurality of battery packs are included in a battery group and are connected in at least one series connection; means for determining a plurality of discharge capabilities of the battery group, each discharge capability corresponding to a different battery pack in the battery group; means for determining whether the power load exceeds a lowest discharge capability of the plurality of discharge capabilities of the battery group; and means for, in response to a determination that the power load exceeds the lowest discharge capability of the plurality of discharge capabilities of the battery group, reducing the power load to not exceed the lowest discharge capability of the plurality of discharge capabilities of the battery group.

In Example 30, the subject matter of Example 29 may optionally include: means for determining the voltage levels of the plurality of battery packs during charging of the battery group; means for determining a plurality of charging capabilities of the battery group based on the determined voltage levels; means for determining whether a charging level of the battery group exceeds a lowest charging capability of the plurality of charging capabilities of the battery group; and means for, in response to a determination that the charging level of the battery group exceeds the lowest charging capability of the plurality of charging capabilities of the battery group, reducing the charging level of the battery group to not exceed the lowest charging capability of the plurality of charging capabilities of the battery group.

In Example 31, the subject matter of Examples 29-30 may optionally include: means for detecting a change of use profile for the plurality of battery packs in a first configuration; means for, in response to the detected change of use profile, reconfiguring the plurality of battery packs into a second configuration; means for determining an updated lowest discharge capability for the plurality of battery packs in the second configuration; and means for reducing the power load to not exceed the updated lowest discharge capability for the plurality of battery packs in the second configuration.

Note that, while FIGs. 6A-12 illustrate various example implementations, other variations are possible. For example, it is contemplated that one or more embodiments may be implemented in the example devices and systems described with reference to FIGs. 1-5. Note that the examples shown in FIGs. 1-12 are provided for the sake of illustration, and are not intended to limit any embodiments. Specifically, while embodiments may be shown in simplified form for the sake of clarity, embodiments may include any number and/or arrangement of components. For example, it is contemplated that some embodiments may include any number of components in addition to those shown, and that different arrangement of the components shown may occur in certain implementations. Furthermore, it is contemplated that various specifics in the examples shown in FIGs. 1-12 may be used anywhere in one or more embodiments.

Understand that various combinations of the above examples are possible. Embodiments may be used in many different types of systems. For example, in one embodiment, a communication device can be arranged to perform the various methods and techniques described herein. Of course, the scope of the present invention is not limited to a communication device, and instead other embodiments can be directed to other types of apparatus for processing instructions, or one or more machine readable media including instructions that in response to being executed on a computing device, cause the device to carry out one or more of the methods and techniques described herein.

References throughout this specification to "one embodiment" or "an embodiment" mean that a particular feature, structure, or characteristic described in connection with the embodiment is included in at least one implementation encompassed within the present invention. Thus, appearances of the phrase "one embodiment" or "in an embodiment" are not necessarily referring to the same embodiment. Furthermore, the particular features, structures, or characteristics may be instituted in other suitable forms other than the particular embodiment illustrated and all such forms may be encompassed within the claims of the present application.

While the present invention has been described with respect to a limited number of embodiments, those skilled in the art will appreciate numerous modifications and variations therefrom. It is intended that the appended claims cover all such modifications and variations as fall within the true spirit and scope of this present invention.

## Claims

1. A system comprising:
at least one component;
a battery group comprising a plurality of battery modules connected in at least one series connection; and
control circuitry to:
monitor a voltage level of each battery module in the battery group during a discharge to a power load of the at least one component;
determine a plurality of discharge capabilities of the battery group, each discharge capability corresponding to a different battery module in the battery group;
determine whether the power load of the at least one component exceeds a lowest discharge capability of the plurality of discharge capabilities of the battery group; and
in response to a determination that the power load of the at least one component exceeds the lowest discharge capability of the plurality of discharge capabilities of the battery group, reduce the power load of the at least one component to not exceed the lowest discharge capability of the plurality of discharge capabilities of the battery group.

2. The system of claim 1, the control circuitry to:
determine voltage levels of the plurality of battery modules during charging of the battery group;
determine a plurality of charging capabilities of the battery group based on the determined voltage levels;
determine whether a charging level of the battery group exceeds a lowest charging capability of the plurality of charging capabilities of the battery group; and
in response to a determination that the charging level of the battery group exceeds the lowest charging capability of the plurality of charging capabilities of the battery group, reduce the charging level of the battery group to not exceed the lowest charging capability of the plurality of charging capabilities of the battery group.

3. The system of any one of claims 1 or 2, the control circuitry to:
detect a change of use profile for the plurality of battery modules in a first configuration;
in response to the detected change of use profile, reconfigure the plurality of battery modules into a second configuration;
determine an updated lowest discharge capability for the plurality of battery modules in the second configuration; and
reduce the power load of the at least one component to not exceed the updated lowest discharge capability for the plurality of battery modules in the second configuration.

4. The system of any one of claims 1 to 3, wherein the plurality of battery modules of the battery group are mounted in a multi-battery carrier, and wherein the multi-battery carrier is mounted in a battery bay of the system.

5. The system of claim 4, wherein the multi-battery carrier comprises a carrier power rail to connect the plurality of battery modules in the at least one series connection, and wherein the multi-battery carrier further comprises carrier control circuitry to determine the lowest discharge capability of the plurality of battery modules.

6. The system of any one of claims 1 to 5, wherein each battery module of the plurality of battery modules comprises module control circuitry to:
monitor the voltage level of the battery module;
determine whether a discharge voltage of the battery module is lower than a predefined minimum discharge voltage; and
in response to a determination that the discharge voltage of the battery module is lower than the predefined minimum discharge voltage, shut down the battery module.

7. The system of claim 6, the module control circuitry further to determine an impedance of the battery module.

8. The system of claim 7, the module control circuitry further to calculate the discharge capability of the battery module based on:
the monitored voltage level of the battery module;
the predefined minimum discharge voltage; and
the impedance of the battery module.

9. A computer implemented method comprising:
monitoring voltage levels of a plurality of battery modules during a discharge to a power load, wherein the plurality of battery modules are included in a battery group and are connected in at least one series connection;
determining a plurality of discharge capabilities of the battery group, each discharge capability corresponding to a different battery module in the battery group;
determining a lowest discharge capability of the plurality of discharge capabilities of the battery group;
determining whether the power load exceeds the lowest discharge capability of the plurality of discharge capabilities of the battery group; and
in response to a determination that the power load exceeds the lowest discharge capability of the plurality of discharge capabilities of the battery group, reducing the power load to not exceed the lowest discharge capability of the plurality of discharge capabilities of the battery group lowest discharge capability of the plurality of discharge capabilities of the battery group.

10. The method of claim 9, comprising:
determining the voltage levels of the plurality of battery modules during charging of the battery group;
determining a plurality of charging capabilities of the battery group based on the determined voltage levels;
determining whether a charging level of the battery group exceeds a lowest charging capability of the plurality of charging capabilities of the battery group; and
in response to a determination that the charging level of the battery group exceeds the lowest charging capability of the plurality of charging capabilities of the battery group, reducing the charging level of the battery group to not exceed the lowest charging capability of the plurality of charging capabilities of the battery group.

11. The method of any one of claims 9 or 10, comprising:
detecting a change of use profile for the plurality of battery modules in a first configuration;
in response to the detected change of use profile, reconfiguring the plurality of battery modules into a second configuration;
determining a lowest discharge capability for the plurality of battery modules in the second configuration; and
reducing the power load of the at least one component to not exceed the lowest discharge capability for the plurality of battery modules in the second configuration.

12. The method of any one of claims 9 to 11, comprising:
for each battery module in the battery group:
determining an impedance of the battery module;
monitoring the voltage level of the battery module;
determining whether a discharge voltage of the battery module is lower than a predefined minimum discharge voltage; and
in response to a determination that the discharge voltage of the battery module is lower than the predefined minimum discharge voltage, shutting down the battery module.

13. The method of claim 12, comprising:
for each battery module of the battery group, calculating the discharge capability of the battery module based on:
the monitored voltage level of the battery module;
the predefined minimum discharge voltage; and
the impedance of the battery module.

14. A machine readable medium having stored thereon data, which if used by at least one machine, causes the at least one machine to fabricate at least one integrated circuit to perform a method according to any one of claims 9 to 13.

15. An apparatus for processing instructions, configured to perform the method of any one of claims 9 to 13.
